# EUROPEAN PATENT SPECIFICATION

(11) **EP 4 433 307 B1**
(45) Date of publication and mention of the grant of the patent: **18.03.2026**
(21) Application number: 22839918.4
(22) Date of filing: 08.11.2022
(51) Int. Cl.: B33Y 80/00, B33Y 10/00, B33Y 70/10, B29C 64/124, B29C 64/245, B29C 70/74

(54) **METHOD FOR ADDITIVELY MANUFACTURING COMPOSITE OBJECTS FOR SECURING TO WEARABLE ARTICLES AND ARTICLES OBTAINED THEREBY**
VERFAHREN ZUR GENERATIVEN FERTIGUNG VON VERBUNDOBJEKTEN ZUR SICHERUNG AN WEARABLE-ARTIKELN UND DADURCH ERHALTENE ARTIKEL
PROCÉDÉ DE FABRICATION ADDITIVE D'OBJETS COMPOSITES DESTINÉS A ÊTRE FIXÉS À DES ARTICLES À PORTER SUR SOI ET ARTICLES AINSI OBTENUS

(30) Priority: 16.11.2021 US 202163264106 P
(43) Date of publication of application: 25.09.2024
(73) Proprietor: Carbon, Inc., Redwood City, California 94063 (US)
(72) Inventor: CRISTIANI, Thomas R., Foster City, California 94404 (US); FORTNER, Shawn, Boulder, Colorado 80301 (US); JHAVERI, Puneet Bhumipal, San Francisco, California 94110 (US)
(74) Representative: HGF
(86) International application number: PCT/US2022/049199
(87) International publication number: WO 2023/091331

(56) References cited:
- WO-A1-2021/220095

## Description

### Field

The present invention concerns methods of making composite products by additive manufacturing. The products may be incorporated into wearable articles such as gloves, garments and helmets.

### Background

Continuous liquid interface production (CLIP), combined with flexible and elastic dual cure additive manufacturing resins and software tools for creating well-tuned lattice structures, has enabled the additive manufacture of a variety of wearable products. Examples of such products include footwear midsoles, helmet liners, bicycle saddles, and gloves *(see* Carbon 3d Print Lattice Innovation-The adidas story (2019); *see also* Perrault et al., U.S. Patent Publication No. 2021/0177093 (June 17, 2021); Primeaux et al., U.S. Patent Publication No. 2021/0024155 (Jan 28, 2021); Bhagwat, U.S. Patent Publication No. 2021/0146227; and Pietrzak and Lowe, U.S. Patent Nos. 10,948,898 and 10,159,296).

Additional examples of wearable articles including additively manufactured components are available. Schwartz and Schwartz (U.S. Patent No. 10,188,319) describe a method for additively manufacturing a custom orthotic or insole from pressure data for the intended recipient. Ketchum and Rothenberg (U.S. Patent Publication No. 2017/0281367), describe methods of additively manufacturing a custom breast prosthesis from 3D scans. Trangmar et al. (U.S. Patent Nos. 10,993,483 and 10,588,359) describes methods of additively manufacturing custom clothing support pieces such as brassiere cups from a 3D digital image of the wearer. Gosieski et al. (U.S. Patent No. 9,817,439) describe a system for additively manufacturing custom human-interfacing devices (including wearable devices, equipment, and tools) from specific human body data. Bologna et al. (U.S. Patent No. 10,780,338) describes a system for additively manufacturing bespoke protective sports equipment with custom-formed, 3D printed, internal padding from the player's unique data. Bologna et al. describe still further systems in U.S. Patent Publication Nos. 2020/0215415 and 2020/0100554.

WO 2021/220095 A1 discloses a method of making an additive manufactured article. The method includes: a) attaching a multilayer structure to a build platform; b) selectively curing a photocurable composition that is in contact with a porous layer of the multilayer structure, thereby forming an object attached to the porous layer; and c) separating the object from the build platform. The multilayer structure includes an adhesive layer, an impermeable layer attached to the adhesive layer, and a porous layer attached to the impermeable layer. The adhesive layer of the multilayer structure is attached to the build platform.

The variety of products in which additively manufactured components can be incorporated creates a need for new and more efficient ways to fasten such components into those products.

### Summary

A method of making a composite product by additive manufacturing is described. The composite product is suitable for efficient fastening into further products by a variety of fastening techniques.

The method includes the steps of: providing an additive manufacturing apparatus having a build platform, the build platform having a planar face on which the product is formed; securing a single-layer fabric sheet to the planar face to provide a planar fabric surface thereon; contacting the fabric sheet to a dual cure resin for a time sufficient for the dual cure resin to fully penetrate the fabric sheet; additively manufacturing an intermediate object on the planar fabric surface in the apparatus by light polymerizing the dual cure resin to produce an intermediate object on the build platform, the intermediate object including the fabric sheet having the three-dimensional object adhered thereto; and concurrently with or following the additively manufacturing step, further curing the intermediate object to produce a composite object comprised of the fabric sheet having the three-dimensional object (for example, a lattice cushion) adhered thereto.

Composite objects, and further products such as wearable products, body contact products, and packaging products that include the composite objects, are also described herein. The fabric sheet (or attachment tabs formed therefrom) facilitate or speed the assembly of the additively manufactured composite into the further products.

While the present invention is described primarily with reference to fabric sheets, those skilled in the art will appreciate that other sheet materials, such as perforated polymer sheets, can also be employed.

The foregoing and other objects and aspects of the present invention are explained in greater detail in the drawings herein and the specification set forth below.

### Brief Description of the Drawings

**Figure 1** is flow chart illustrating one embodiment of a method as described herein.
**Figure 2** is a side-sectional schematic illustration of a composite object as described herein, showing the fabric, polymer object and interpenetrating polymer.
**Figure 3** is a top, schematic, view showing the cutting or trimming of a fabric sheet around a cut line (dashed line) to produce a finished object having a fabric securement tab.
**Figure 4A** is a top photographic view of a polymer lattice object additively manufactured on a fabric sheet by a method as described herein.
**Figure 4B** is a bottom photographic view of the same object and fabric sheet shown in **Figure 4A****.**
**Figure 5** is an enlarged view of a portion of **Figure 4B****.**
**Figure 6** is further enlarged view of a portion of **Figure 5****.**
**Figure 7** is a side photographic view of a portion of the object of **Figures 4A-6****,** cut so that the polymer of the additively manufactured object that permeates (or interpenetrates) the perpendicularly cut fibers of the fabric sheet can be clearly seen.
**Figure 8** shows a first slice projection image without tacking, hence requiring adhesive application to the face of the build platform.
**Figure 9** shows a first slice projection image with tacking to thereby reduce or eliminate the need for adhesive application to the face of the build platform.

### Detailed Description of Illustrative Embodiments

The present invention is now described more fully hereinafter with reference to the accompanying drawings, in which embodiments of the invention are shown. This invention may, however, be embodied in many different forms and should not be construed as limited to the embodiments set forth herein; rather these embodiments are provided so that this disclosure will be thorough and complete and will fully convey the scope of the invention as defined in the appended claims to those skilled in the art.

Like numbers refer to like elements throughout. In the figures, the thickness of certain lines, layers, components, elements, or features may be exaggerated for clarity.

The terminology used herein is for the purpose of describing particular embodiments only and is not intended to be limiting of the invention. As used herein, the singular forms "a," "an" and "the" are intended to include plural forms as well, unless the context clearly indicates otherwise. It will be further understood that the terms "comprises" or "comprising," when used in this specification, specify the presence of stated features, integers, steps, operations, elements components and/or groups or combinations thereof, but do not preclude the presence or addition of one or more other features, integers, steps, operations, elements, components and/or groups or combinations thereof.

As used herein, the term "and/or" includes any and all possible combinations or one or more of the associated listed items, as well as the lack of combinations when interpreted in the alternative ("or").

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the specification and claims and should not be interpreted in an idealized or overly formal sense unless expressly so defined herein. Well-known functions or constructions may not be described in detail for brevity and/or clarity.

It will be understood that when an element is referred to as being "on," "attached" to, "connected" to, "coupled" with, "contacting," etc., another element, it can be directly on, attached to, connected to, coupled with and/or contacting the other element or intervening elements can also be present. In contrast, when an element is referred to as being, for example, "directly on," "directly attached" to, "directly connected" to, "directly coupled" with or "directly contacting" another element, there are no intervening elements present. It will also be appreciated by those of skill in the art that references to a structure or feature that is disposed "adjacent" another feature can have portions that overlap or underlie the adjacent feature.

Spatially relative terms, such as "under," "below," "lower," "over," "upper" and the like, may be used herein for ease of description to describe an element's or feature's relationship to another element(s) or feature(s) as illustrated in the figures. It will be understood that the spatially relative terms are intended to encompass different orientations of the device in use or operation in addition to the orientation depicted in the figures. For example, if the device in the figures is inverted, elements described as "under" or "beneath" other elements or features would then be oriented "over" the other elements or features. Thus, the exemplary term "under" can encompass both an orientation of over and under. The device may otherwise be oriented (rotated 90 degrees or at other orientations) and the spatially relative descriptors used herein interpreted accordingly. Similarly, the terms "upwardly," "downwardly," "vertical," "horizontal" and the like are used herein for the purpose of explanation only, unless specifically indicated otherwise.

It will be understood that, although the terms first, second, etc., may be used herein to describe various elements, components, regions, layers and/or sections, these elements, components, regions, layers and/or sections should not be limited by these terms. Rather, these terms are only used to distinguish one element, component, region, layer and/or section, from another element, component, region, layer and/or section. Thus, a first element, component, region, layer, or section discussed herein could be termed a second element, component, region, layer, or section without departing from the teachings of the present invention. The sequence of operations (or steps) is not limited to the order presented in the claims or figures unless specifically indicated otherwise.

### 1. ADDDITIVE MANUFACTURING AND RESINS.

Stereolithography, including bottom-up and top-down techniques, are known and described in, for example, U.S. Patent No. 5,236,637 to Hull, U.S. Patent Nos. 5,391,072 and 5,529,473 to Lawton, U.S. Patent No. 7,438,846 to John, U.S. Patent No. 7,892,474 to Shkolnik, U.S. Patent No. 8,110,135 to El-Siblani, U.S. Patent Publication No. 2013/0292862 to Joyce, and U.S. Patent Publication No. 2013/0295212 to Chen et al.

Dual cure resins for additive manufacturing are known and described in, for example, U.S. Patent Nos. 9,676,963; 9,598,606; 9,453,142, and others. Non-limiting examples of dual cure resins include, but are not limited to, resins for producing objects comprised of polymers such as polyurethane, polyurea, and copolymers thereof; objects comprised of epoxy; objects comprised of cyanate ester; objects comprised of silicone, etc. In general, such resins comprise resin comprises a mixture of *(i)* a light polymerizable liquid first component, and *(ii)* a second solidifiable component that is different from said first component. For example, the first component *(i)* can comprise monomers and/or prepolymers comprising reactive end groups selected from the group consisting of acrylates, methacrylates, α-olefins, N-vinyls, acrylamides, methacrylamides, styrenics, epoxides, thiols, 1,3-dienes, vinyl halides, acrylonitriles, vinyl esters, maleimides, and vinyl ethers. The second solidifiable component *(ii)* can comprise monomers and/or prepolymers comprising reactive end groups selected from the group consisting of: epoxy and amine, epoxy and hydroxyl, oxetane and amine, oxetane and alcohol, isocyanate and hydroxyl, isocyanate and amine, isocyanate and carboxylic acid, cyanate ester, anhydride and amine, amine and carboxylic acid, amine and ester, hydroxyl and carboxylic acid, hydroxyl and acid chloride, amine and acid chloride, vinyl and Si-H, Si-Cl and hydroxyl, Si-Cl and amine, hydroxyl and aldehyde, amine and aldehyde, hydroxymethyl or alkoxymethyl amide and alcohol, click chemistry reactive groups, alkene and sulfur, alkene and thiol, alkyne and thiol, hydroxyl and halide, Si-OH and hydroxyl, Si-OH and Si-H, Si-OH and Si-OH, perfluorovinyl, diene and dienophiles, olefin metathesis polymerization groups, olefin polymerization groups for Ziegler-Natta catalysis, and ring-opening polymerization groups and mixtures thereof.

Polymers formed from such dual cure resins may comprise an interpenetrating polymer network, semi-interpenetrating polymer network, or sequential interpenetrating polymer network formed from the first component and the second solidifiable component.

In some embodiments, the object is formed by continuous liquid interface production (CLIP). CLIP is known and described in, for example, PCT Application Nos. PCT/US2014/015486 (U.S. Patent No. 9,211,678); PCT/US2014/015506 (U.S. Patent No. 9,205,601), PCT/US2014/015497 (U.S. Patent No. 9,216,546), and in J. Tumbleston, D. Shirvanyants, N. Ermoshkin et al., Continuous liquid interface production of 3D Objects, Science 347, 1349-1352 (2015). *See also* R. Janusziewcz et al., Layerless fabrication with continuous liquid interface production, Proc. Natl. Acad. Sci. USA 113, 11703-11708 (October 18, 2016). In some embodiments, CLIP employs features of a bottom-up three-dimensional fabrication as described above, but the irradiating and/or said advancing steps are carried out while also concurrently maintaining a stable or persistent liquid interface between the growing object and the build surface or window, such as by: *(i)* continuously maintaining a dead zone of polymerizable liquid in contact with said build surface, and *(ii)* continuously maintaining a gradient of polymerization zone (such as an active surface) between the dead zone and the solid polymer and in contact with each thereof, the gradient of polymerization zone comprising the first component in partially-cured form. In some embodiments of CLIP, the optically transparent member comprises a semipermeable member (*e.g.,* a fluoropolymer), and the continuously maintaining a dead zone is carried out by feeding an inhibitor of polymerization through the optically transparent member, thereby creating a gradient of inhibitor in the dead zone and optionally in at least a portion of the gradient of polymerization zone. Other approaches for carrying out CLIP that can be used in the present invention and obviate the need for a semipermeable "window" or window structure include utilizing a liquid interface comprising an immiscible liquid (*see* L. Robeson et al., PCT Publication No. WO2015/164234, published October 29, 2015), generating oxygen as an inhibitor by electrolysis (*see* I. Craven et al., PCT Publication No. WO2016/133759, published August 25, 2016), and incorporating magnetically positionable particles to which the photoactivator is coupled into the polymerizable liquid (*see* J. Rolland, PCT Publication No. WO2016/145182, published September 15, 2016).

Other examples of methods and apparatus for carrying out particular embodiments of CLIP include, but are not limited to: Batchelder et al., Continuous liquid interface production system with viscosity pump, U.S. Patent Publication No. 2017/0129169 (May 11, 2017); Sun and Lichkus, Three-dimensional fabricating system for rapidly producing objects, U.S. Patent Publication No. 2016/0288376 (Oct. 6, 2016); Willis et al., 3dprint adhesion reduction during cure process, U.S. Patent Publication No. 2015/0360419 (Dec. 17, 2015); Lin et al., Intelligent 3d printing through optimization of 3d print parameters, U.S. Patent Publication No. 2015/0331402 (Nov. 19, 2015); and D. Castanon, Stereolithography System, U.S. Patent Publication No. 2017/0129167 (May 11, 2017).

After the object is formed, it is typically cleaned (*e.g.,* by washing, centrifugal separation, wiping/blowing, etc., including combinations thereof), and in some embodiments then further cured, such as by baking (although further curing may in some embodiments be concurrent with the first cure, or may be by different mechanisms such as by contacting to water, as described in U.S. Patent No. 9,453,142 to Rolland et al.).

### 2. MAKING COMPSITE PRODUCTS.

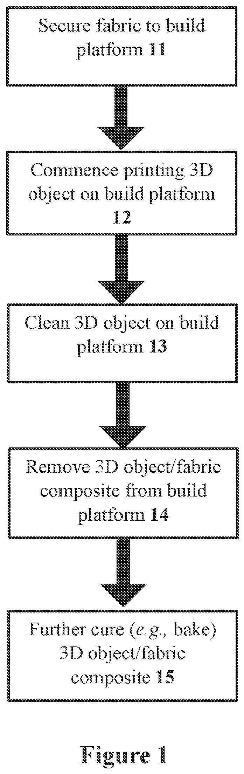

Non-limiting embodiments of methods of making composite products/objects **(20)** are schematically illustrated in **Figures 1-3****.** As noted above, such methods generally include:
providing an additive manufacturing apparatus having a build platform, the build platform having a planar face on which the product is formed;
securing a fabric sheet to the planar face **(11)** to provide a planar fabric surface thereon; and
additively manufacturing an intermediate object on the planar fabric surface **(12)** in the apparatus by light polymerizing a dual cure resin to produce an intermediate object on the build platform, the intermediate object comprising the fabric sheet having the three-dimensional object adhered thereto;
optionally, but in some embodiments, preferably, cleaning the object on the build platform **(13);**
optionally, but in some embodiments, preferably, removing the object from the build platform **(14);** and then
concurrently with or following the additively manufacturing step, further curing **(15)** (*e.g.,* by baking, microwave irradiating, moisture curing, contacting to a catalyst) the intermediate object to produce a composite object comprised of the fabric sheet having the three-dimensional object **(21)** adhered thereto. If the composite object has not yet been removed from the build platform, it can be removed after further curing.

Any of a variety of fabrics **(22)** can be used. The fabric is a single-layer fabric. The fabric may comprise a knit fabric, a woven fabric, a non-woven fabric (*e.g*., spunbond, airlaid, drylaid, wetlaid, melt-blown, needle-punched, and thermal bonded fabrics, etc.), or a composite thereof. The fabric may be comprised of (elastic or inelastic) natural fibers (*e.g.,* cotton, wool, linen, silk, flax, jute, hemp, etc.), synthetic fibers (*e.g*., rayon, nylon, polyester, acrylic, polyolefin, spandex (also referred to as elastane or LYCRA^{®}), etc.), or a combination thereof (fabric or fibers may be untreated or treated with a surface coating, for example to impart stain or water resistance, etc.). The fabric or fibers, whether treated or untreated, preferably has a surface energy to allow wetting of the liquid resin to its surface.

In preferred embodiments, the fabric is comprised of threads and/or fibers that define voids (*e.g*., spaces between the threads/fibers in the fabric and/or spaces within the threads and/or fibers themselves), the resin permeates or penetrates into the voids during the additively manufacturing step, and the additively manufactured object comprises a permeating portion **(23)** formed in the voids by the light polymerizing and the further curing of the resin. The resin may permeate or penetrate both types of voids in the fabric, though it is not required that the voids within the threads/fibers themselves (when present) be filled if the voids between the threads/fibers in the fabric are filled.

The additively manufacturing step is initiated by contacting the fabric sheet to the resin for a time sufficient for the resin to permeate into the voids (*e.g.,* by holding the build platform stationary) before initiating the light polymerizing (and then initiating further movement of the build platform). The resin fully penetrates the fabric sheet.

When cleaned, the object may be cleaned by any suitable technique, including but not limited to washing, centrifugal separation, wiping, blowing, etc., the intermediate object after the additively manufacturing step (before, or after, removing the intermediate object from the build platform).

In some embodiments, as noted above, the further curing step is carried out after the additively manufacturing step, and optionally, but in some embodiments, preferably, after the cleaning step.

In preferred embodiments, the three-dimensional object **(21)** comprises a lattice. In some preferred embodiments, the three-dimensional object comprises a cushion. In some preferred embodiments, the three -dimensional object is flexible or elastic.

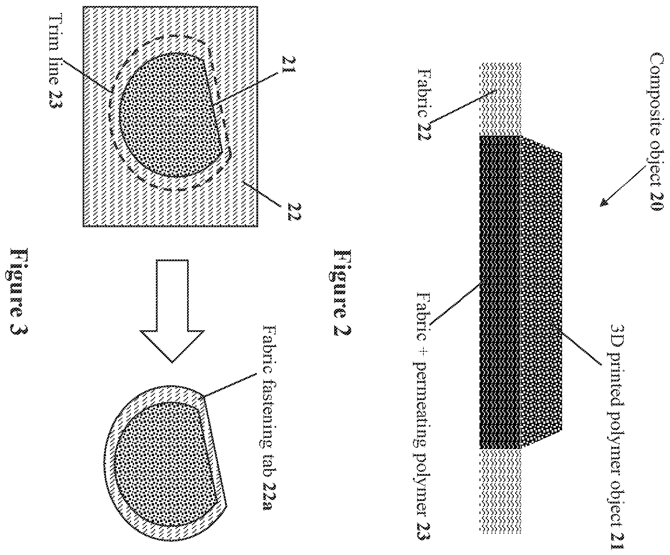

While the composite product may be made with the fabric sheet pre-cut to the appropriate size and shape for the ultimate intended use, in other embodiments the three-dimensional object has a peripheral edge portion contacting the fabric sheet which defines a trim line **(23).** In this case, the method may further include the step of trimming the fabric sheet to form a composite object comprising the three-dimensional object having a fabric fastening tab **(22a)** connected thereto, as schematically illustrated in **Figure 3****.**

### 3. USE OF COMPOSITE PRODUCTS IN FINISHED PRODUCTS.

The composite objects described above are useful for incorporating the additively manufactured features into a variety of further products. Typically, such further products include at least one structural portion and a cushioning portion. In such products, the cushioning portion is the composite object as described above, which can be conveniently connected to the structural portion by the fabric sheet or fastening tab. The sheet or fastening tab can be secured to the structural component by any suitable technique, including sewing (*e.g.,* thread), adhesive, mechanical fasteners (*e.g.,* snaps, zippers, hook-and-loop fasteners, etc.), or combinations thereof.

The structural portion of the finished product to which the composite is fastened will depend upon the nature of the finished product, non-limiting examples of which include a wearable, body contact, or protective packaging products. Specific examples of the foregoing include, but are not limited to, gloves, hats, helmets, footwear, garments, (*e.g*., brassieres or sports brassieres, knee, elbow, shin, shoulder, chest or back protective garments, etc.), backpacks (*e.g*., the back, hip, or shoulder pad thereof), headrests, seats, seat covers, saddles, saddle covers, beds, bedcovers, automotive or aerospace interior panels, electronic product packages (*e.g.,* a camera, cell phone, or computer protective case), fluid container packages (*e.g.,* outer packaging for a polymer, glass, or metal container for a liquid, particulate solid, or gas), etc.

The methods and composite products described herein are further illustrated by the non-limiting example below.

### EXAMPLE 1

This example was carried out with 200 Denier OTTERTEX^{™} brand polyester ripstop fabric (DWR), Carbon, Inc., EPU40 elastic polyurethane dual cure resin, and a Carbon, Inc., M2 bottom-up additive manufacturing apparatus.

The fabric was adhered to the build platform of the M2 apparatus with double-sided adhesive tape (3M 9495LE Adhesive transfer tape), the fabric-covered build platform installed into the M2 printer, and the resin dispensed into a heated M2 window cassette in accordance with standard techniques.

The default print plan parameters for EPU40 were modified to offset for the thickness of the adhesive tape and fabric, the first slice exposure delay was increased to five minutes to allow the resin to soak into the voids within the fabric, and a high first slice exposure multiplier was included to provide good cure-through on the first slice and good mechanical interlocking of the light polymerized constituents of the resin with the fabric.

After printing of the 3D object (a lattice cushion) on the fabric, the build platform with the fabric and 3D object was placed in a Carbon, Inc. L1 centrifugal separation and spun at 300rpm for 2 minutes to separate excess residual resin. The fabric with embedded objects was then easily removed from the adhesive layer, leaving the adhesive layer secured to the platform, and baked using a standard 120 degree Centigrade, 8 hour EPU 40 baking schedule.

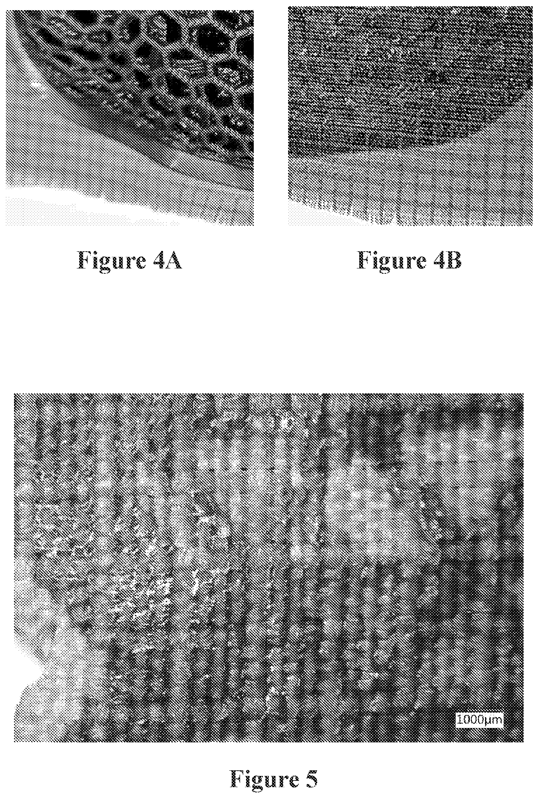

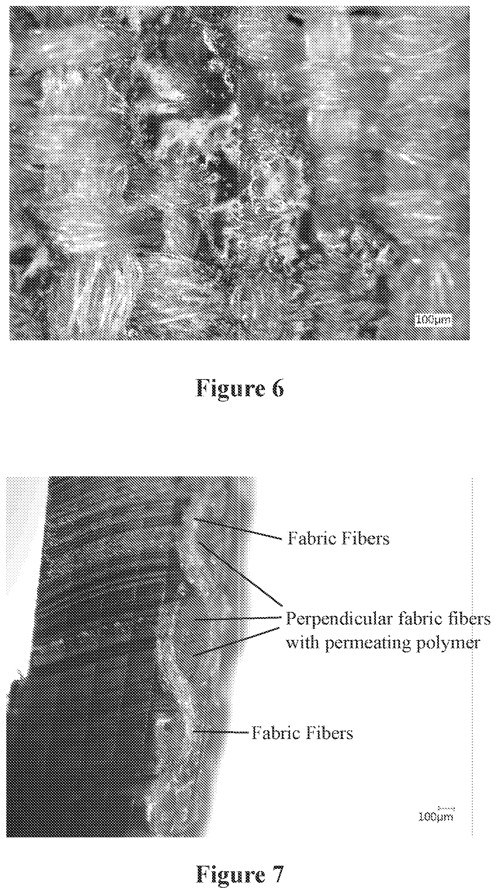

Results, given in **Figures 4A-7****,** show an elastic lattice pad securely bonded to a fabric by a polymerized resin portion interpenetrating the voids of the fabric. The interpenetrating polymer is most clearly seen in the perpendicular fibers of **Figure 7****,** as threads cut parallel to their fibers tend to have the polymer stripped away by cutting.

### EXAMPLE 2

### Enhancing Breathability with Perforated Fabric

To gain breathability through a 3D printed object with holes, like a lattice cushion, and fabric, the object can be printed on perforated fabric.

This example was carried out with laser cut perforated microsuede fabric, Carbon, Inc. EPU 44 elastic polyurethane dual cure resin, and a Carbon, Inc. L1 bottom-up additive manufacturing apparatus (available from Carbon, Inc., Redwood City CA USA). The fabric was adhered to the build platform of the L1 apparatus with double-sided adhesive tape (3M 9495LE Adhesive transfer tape), the fabric-covered build platform installed into the L1 printer, and the resin dispensed into a heated L1 window cassette in accordance with standard techniques. The default print plan parameters for EPU 44 were modified to offset for the thickness of the adhesive tape and fabric, the first slice exposure delay was increased to five minutes to allow the resin to soak into the voids within the fabric and a lower than nominal first slice exposure multiplier was used to prevent flashing from covering the perforations with light polymerized resin and since the texture of the fabric provides stronger mechanical interlocking of the light polymerized resin with the fabric than to the printing surface of the platform.

To separate excess residual resin after printing of the 3D objects (multiple lattice cushions) on the fabric, the build platform with the fabric and 3D objects was first placed in a centrifugal separation spinner and spun at about 400rpm for 4 minutes. Next the build platform with the fabric and 3D objects was placed in an air knife machine which blew compressed air in sweeping motions over 3D objects. The fabric with embedded objects was then easily removed from the adhesive layer, leaving the adhesive layer secured to the platform, and baked using a standard EPU 44 bake schedule.

### EXAMPLE 3

### Reducing Adhesive Use by Tacking

Minimal to no adhesive can be used to adhere the fabric to the face of the build platform during the print by curing resin through the fabric and onto the platform.

This example is carried out on a 65% Polyester 35% Cotton fabric, Carbon, Inc. EPU 41 elastic polyurethane dual cure resin, and a Carbon, Inc. M3 bottom-up additive manufacturing apparatus (available from Carbon, Inc.). The fabric was wrapped around the build platform by using double-sided adhesive tape (3M 9495LE Adhesive transfer tape) to adhere the edges of the fabric that extended past the printable face of the platform to the sides of the platform adj acent to the printable plane, with the face of the build platform thereby being covered with fabric. Resin was dispensed into a heated M3 window cassette in accordance with standard techniques.

The default print plan parameters for EPU 41 were modified to offset for the thickness of the fabric, the first slice exposure delay was increased to five minutes to allow the resin to soak into the voids within the fabric, and a high first slice exposure multiplier was included to provide good cure-through on the first slice and good mechanical interlocking of the light polymerized constituents of the resin with the fabric, and *resin through the fabric to the platform.*

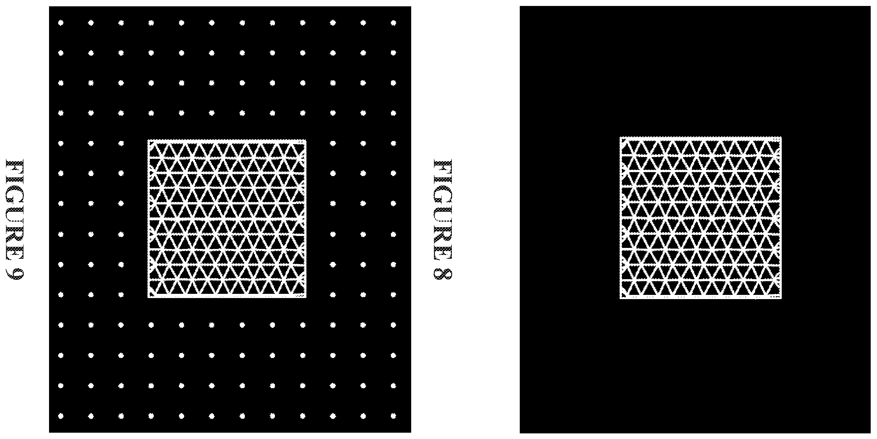

To minimize sagging or pulling of the fabric away from the build platform during production of the part, and corresponding distortion of the part or print failure, patterned shapes of light were exposed around the printed part itself to help adhere, or tack, the fabric itself to the platform. **Figure 8** shows the first slice projection image of a lattice part without tacking and **Figure 9** shows first slice projection image with tacking, where the tacking is carried out with discrete exposure points (white dots in the black field surrounding the first slice of the lattice part). Tacking of the fabric can also be carried out with any suitable exposure pattern, although a major portion (*e.g.* at least sixty or seventy percent) of the area of the fabric surrounding the printed part remains unexposed to facilitate separation of the fabric and part from the build platform once the composite product has been produced.

After printing of the lattice part on the fabric, the build platform with the fabric and 3D object was placed in a centrifugal separation and spun at 400rpm for 4 minutes to separate excess residual resin. The fabric with embedded objects was then easily removed from the platform by gently pulling the fabric and separating the exposed resin of the part and tackings from the platform. The non-part side of the fabric was then placed on a parchment sheet lined bake tray and baked using a standard 120 degree Centigrade, 8 hour EPU 41 bake schedule.

The foregoing is illustrative of the present invention, and is not to be construed as limiting thereof. The invention is defined by the following claims.

## Claims

1. A method of making a composite product (20) by additive manufacturing, comprising the steps of:
providing an additive manufacturing apparatus having a build platform, the build platform having a planar face on which the product is formed;
securing a single-layer fabric sheet (22) to said planar face to provide a planar fabric surface thereon;
contacting said fabric sheet (22) to a dual cure resin for a time sufficient for said dual cure resin to fully penetrate the fabric sheet (22);
additively manufacturing an intermediate object (21) on said planar fabric surface in said apparatus by light polymerizing the dual cure resin to produce an intermediate object (21) on said build platform, the intermediate object (21) comprising the fabric sheet (22) having the three-dimensional object adhered thereto; and
concurrently with or following said additively manufacturing step, further curing said intermediate object (21) to produce a composite object (20) comprised of said fabric sheet (22) having said three-dimensional object adhered thereto.

2. The method of claim 1, wherein:
said dual cure resin comprises a mixture of (i) a light polymerizable liquid first component, and (ii) a second solidifiable component that is different from said first component

3. The method of claim 2, wherein said three-dimensional object comprises an interpenetrating polymer network, semi-interpenetrating polymer network, or sequential interpenetrating polymer network formed from said first component and said second solidifiable component.

4. The method of any preceding claim, wherein said fabric sheet (22) comprises a knit fabric, a woven fabric, a non-woven fabric, or a composite thereof.

5. The method of any preceding claim, wherein said fabric sheet (22) is comprised of elastic or inelastic natural fibers, synthetic fibers, or a combination thereof.

6. The method of any preceding claim, wherein:
said fabric sheet (22) is comprised of threads and/or fibers that define voids;
said dual cure resin penetrates into said voids during said additively manufacturing step; and
said additively manufactured object comprises an interpenetrating portion formed in said voids by said light polymerizing and said further curing of said dual cure resin.

7. The method of claim 6, wherein said additively manufacturing step is initiated by contacting said fabric sheet (22) to said dual cure resin for a time sufficient for said dual cure resin to penetrate into said voids before initiating said light polymerizing.

8. The method of any preceding claim, wherein said additively manufacturing step is carried out by bottom-up stereolithography.

9. The method of any preceding claim, further comprising cleaning said intermediate object (21) after said additively manufacturing step.

10. The method of any preceding claim, wherein said further curing step is carried out after said additively manufacturing step, and optionally but in some embodiments preferably after said cleaning step.

11. The method of any preceding claim, wherein said three-dimensional object comprises a lattice or a cushion.

12. The method of any preceding claim, wherein said three-dimensional object is flexible or elastic.

13. The method of any preceding claim, wherein said three-dimensional object has a peripheral edge portion contacting said fabric sheet (22), and said method further comprises the step of:
trimming said fabric sheet (22) to form a composite object comprising said three-dimensional object having a fabric fastening tab (22a) connected thereto.

14. The method of any preceding claim, wherein said build platform has a circumferential edge portion surrounding said planar face, and said securing step is carried out by connecting said fabric sheet (22) to said circumferential edge portion.

15. The method of claim 14, further comprising the step of:
further securing said planar fabric surface (22) to said build platform planar face by initiating said additive manufacturing step with a first slice exposure comprising a plurality of tacking exposures surrounding the intermediate object image slice.

## Patentansprüche

1. Verfahren zum Herstellen eines Verbundprodukts (20) durch generative Fertigung, umfassend die folgenden Schritte:
Bereitstellen einer Vorrichtung zur generativen Fertigung, die eine Bauplattform aufweist, wobei die Bauplattform eine ebene Fläche aufweist, auf der das Produkt gebildet wird;
Befestigen einer einlagigen Stoffbahn (22) an der ebenen Fläche, um eine ebene Stoffoberfläche darauf bereitzustellen;
Kontaktieren der Stoffbahn (22) mit einem dualhärtenden Harz für eine Zeit, die ausreicht, damit das dualhärtende Harz die Stoffbahn (22) vollständig durchdringt;
generatives Fertigen eines Zwischenobjekts (21) auf der ebenen Stoffoberfläche in der Vorrichtung durch Lichtpolymerisieren des dualhärtenden Harzes, um ein Zwischenobjekt (21) auf der Bauplattform zu erzeugen, wobei das Zwischenobjekt (21) die Stoffbahn (22) umfasst, die das daran anhaftende dreidimensionale Objekt aufweist, und
gleichzeitig mit oder nach dem Schritt der generativen Fertigung, weiteres Aushärten des Zwischenobjekts (21), um ein Verbundobjekt (20) zu erzeugen, das die Stoffbahn (22) umfasst, die das daran anhaftende dreidimensionale Objekt aufweist.

2. Verfahren nach Anspruch 1, wobei:
das dualhärtende Harz eine Mischung aus (i) einer lichtpolymerisierbaren flüssigen ersten Komponente und (ii) einer zweiten verfestigbaren Komponente, die sich von der ersten Komponente unterscheidet, umfasst.

3. Verfahren nach Anspruch 2, wobei das dreidimensionale Objekt ein interpenetrierendes Polymernetzwerk, ein semi-interpenetrierendes Polymernetzwerk oder ein sequentielles interpenetrierendes Polymernetzwerk umfasst, das aus der ersten Komponente und der zweiten verfestigbaren Komponente gebildet ist.

4. Verfahren nach einem vorhergehenden Anspruch, wobei die Stoffbahn (22) einen Strickstoff, einen gewebten Stoff, einen Vliesstoff oder einen Verbundstoff davon umfasst.

5. Verfahren nach einem vorhergehenden Anspruch, wobei die Stoffbahn (22) elastische oder unelastische Naturfasern, synthetische Fasern oder einer Kombination davon umfasst.

6. Verfahren nach einem vorhergehenden Anspruch, wobei:
die Stoffbahn (22) Fäden und/oder Fasern, die Hohlräume definieren, umfasst;
das dualhärtende Harz während des Schritts der generativen Fertigung in die Hohlräume eindringt; und
das generativ gefertigte Objekt einen interpenetrierenden Abschnitt umfasst, der in den Hohlräumen durch das Lichtpolymerisieren und das weitere Härten des dualhärtenden Harzes gebildet wird.

7. Verfahren nach Anspruch 6, wobei der Schritt der generativen Fertigung eingeleitet wird, indem die Stoffbahn (22) mit dem dualhärtenden Harz für eine Zeit in Kontakt gebracht wird, die ausreicht, damit das dualhärtende Harz in die Hohlräume eindringt, bevor die Lichtpolymerisation eingeleitet wird.

8. Verfahren nach einem vorhergehenden Anspruch, wobei der Schritt der generativen Fertigung durch von unten nach oben gerichtete Stereolithographie durchgeführt wird.

9. Verfahren nach einem vorhergehenden Anspruch, ferner umfassend das Reinigen des Zwischenobjekts (21) nach dem Schritt der generativen Fertigung.

10. Verfahren nach einem vorhergehenden Anspruch, wobei der weitere Aushärtungsschritt nach dem Schritt der generativen Fertigung und optional, aber in einigen Ausführungsformen bevorzugt nach dem Reinigungsschritt durchgeführt wird.

11. Verfahren nach einem vorhergehenden Anspruch, wobei das dreidimensionale Objekt ein Gitter oder ein Kissen umfasst.

12. Verfahren nach einem vorhergehenden Anspruch, wobei das dreidimensionale Objekt flexibel oder elastisch ist.

13. Verfahren nach einem vorhergehenden Anspruch, wobei das dreidimensionale Objekt einen Umfangskantenabschnitt aufweist, der die Stoffbahn (22) kontaktiert, und das Verfahren ferner den folgenden Schritt umfasst:
Beschneiden der Stoffbahn (22), um ein Verbundobjekt zu bilden, das das dreidimensionale Objekt mit einer damit verbundenen Stoffbefestigungslasche (22a) umfasst.

14. Verfahren nach einem vorhergehenden Anspruch, wobei die Bauplattform einen Umfangskantenabschnitt aufweist, der die ebene Fläche umgibt, und der Befestigungsschritt durchgeführt wird, indem die Stoffbahn (22) mit dem Umfangskantenabschnitt verbunden wird.

15. Verfahren nach Anspruch 14, ferner umfassend den folgenden Schritt:
ferner Befestigen der ebenen Stoffoberfläche (22) an der ebenen Fläche der Bauplattform, indem der Schritt des generativen Fertigens mit einer ersten Scheibenfreilegung eingeleitet wird, die eine Vielzahl von Heftfreilegungen umfasst, die die Zwischenobjektbildscheibe umgeben.

## Revendications

1. Procédé de fabrication d'un produit composite (20) par fabrication additive, comprenant les étapes suivantes :
la fourniture d'un appareil de fabrication additive comportant une plateforme de construction, la plateforme de construction comportant une face plane sur laquelle le produit est formé ;
la fixation d'une feuille de tissu monocouche (22) à ladite face plane pour fournir une surface de tissu plane sur celle-ci ;
la mise en contact de ladite feuille de tissu (22) avec une résine à double durcissement pendant une durée suffisante pour que ladite résine à double durcissement pénètre complètement dans la feuille de tissu (22) ;
la fabrication additive d'un objet intermédiaire (21) sur ladite surface de tissu plane dans ledit appareil par polymérisation à la lumière de la résine à double durcissement pour produire un objet intermédiaire (21) sur ladite plateforme de construction, l'objet intermédiaire (21) comprenant la feuille de tissu (22) à laquelle l'objet tridimensionnel est collé ; et
simultanément à ladite étape de fabrication additive ou après celle-ci, le durcissement supplémentaire dudit objet intermédiaire (21) pour produire un objet composite (20) composé de ladite feuille de tissu (22) sur laquelle ledit objet tridimensionnel est collé.

2. Procédé selon la revendication 1,
ladite résine à double durcissement comprenant un mélange (i) d'un premier composant liquide polymérisable léger et (ii) d'un second composant solidifiable différent dudit premier composant.

3. Procédé selon la revendication 2, ledit objet tridimensionnel comprenant un réseau polymère interpénétrant, un réseau polymère semi-interpénétrant ou un réseau polymère interpénétrant séquentiel formé à partir dudit premier composant et dudit second composant solidifiable.

4. Procédé selon l'une quelconque des revendications précédentes, ladite feuille de tissu (22) comprenant un tissu tricoté, un tissu tissé, un tissu non tissé ou un composite de ceux-ci.

5. Procédé selon l'une quelconque des revendications précédentes, ladite feuille de tissu (22) étant composée de fibres naturelles élastiques ou non élastiques, de fibres synthétiques ou d'une combinaison de celles-ci.

6. Procédé selon l'une quelconque des revendications précédentes,
ladite feuille de tissu (22) étant composée de fils et/ou de fibres qui définissent des vides ;
ladite résine à double durcissement pénétrant dans lesdits vides au cours de ladite étape de fabrication additive ; et
ledit objet fabriqué de manière additive comprenant une partie interpénétrante formée dans lesdits vides par ladite polymérisation à la lumière et ledit durcissement supplémentaire de ladite résine à double durcissement.

7. Procédé selon la revendication 6, ladite étape de fabrication additive étant lancée en mettant en contact ladite feuille de tissu (22) avec ladite résine à double durcissement pendant une durée suffisante pour que ladite résine à double durcissement pénètre dans lesdits vides avant le lancement de ladite polymérisation à la lumière.

8. Procédé selon l'une quelconque des revendications précédentes, ladite étape de fabrication additive étant effectuée par stéréolithographie ascendante.

9. Procédé selon l'une quelconque des revendications précédentes, comprenant en outre le nettoyage dudit objet intermédiaire (21) après ladite étape de fabrication additive.

10. Procédé selon l'une quelconque des revendications précédentes, ladite étape de durcissement supplémentaire étant effectuée après ladite étape de fabrication additive et éventuellement, mais dans certains modes de réalisation de préférence, après ladite étape de nettoyage.

11. Procédé selon l'une quelconque des revendications précédentes, ledit objet tridimensionnel comprend un treillis ou un coussin.

12. Procédé selon l'une quelconque des revendications précédentes, ledit objet tridimensionnel étant flexible ou élastique.

13. Procédé selon l'une quelconque des revendications précédentes, ledit objet tridimensionnel comportant une partie formant bord périphérique en contact avec ladite feuille de tissu (22), et ledit procédé comprenant en outre l'étape suivante :
le rognage de ladite feuille de tissu (22) pour former un objet composite comprenant ledit objet tridimensionnel auquel est reliée une languette de fixation de tissu (22a).

14. Procédé selon l'une quelconque des revendications précédentes, ladite plateforme de construction comportant une partie formant bord circonférentiel entourant ladite face plane, et ladite étape de fixation étant effectuée en reliant ladite feuille de tissu (22) à ladite partie formant bord circonférentiel.

15. Procédé selon la revendication 14, comprenant en outre l'étape suivante :
la fixation supplémentaire de ladite surface de tissu plane (22) à ladite face plane de la plateforme de construction en lançant ladite étape de fabrication additive avec une première exposition de tranche comprenant une pluralité d'expositions de collage entourant la tranche d'image d'objet intermédiaire.
